# EUROPEAN PATENT SPECIFICATION

(11) **EP 1 297 754 B1**
(45) Date of publication and mention of the grant of the patent: **03.01.2007**
(21) Application number: 01830608.4
(22) Date of filing: 26.09.2001
(51) Int. Cl.: A23L 1/16, A23L 1/18

(54) **A method for producing an expanded pasta-based snack**
Verfahren zur Herstellung von einem expandierten Teigwaren-Snackprodukt
Procédé de fabrication d'un snack expansé voisin des pâtes alimentaires

(43) Date of publication of application: 02.04.2003
(73) Proprietor: Barilla G. e R. Fratelli S.p.A., 43100 Parma (IT)
(72) Inventor: Petronio, Michela, 43010 Fraore (Parma) (IT)
(74) Representative: Ferreccio, Rinaldo

(56) References cited:
- US-A- 4 525 371
- US-A- 5 695 804
- US-A- 5 861 186
- US-A- 6 045 851
- R.B. FAST: "Breakfast Cereals and How They Are Made" 1990 , AMERICAN ASSOCIATION OF CEREAL CHEMISTS , USA XP002190461 Pages 130-133 * page 132, paragraph 2 - page 133, paragraph 1 *

## Description

### Field of application

The present invention comes within the technical sector of the food industry and refers to a method for the production of an expanded pasta-based snack.

The invention refers particularly to a method for the production of an non-fried expanded snack based on pasta, with a reduced fat content and the typical form of classic short pasta shapes.

### Known state of the art

The longest known salty snacks are the classic fried potato crisps/chips, and they are still today extremely widespread. These were followed by other types of snacks, also fried, characterized by quite a high fat content (up to 30%). It is only in recent decades that we have seen the appearance on the market of non-fried snacks, as a consequence of consumer demand for foods more acceptable from the dietetic-nutritional point of view.

The main obstacle to the diffusion of these last snack types is the fact that they cannot be compared with fried snacks in terms of taste, consistency and appearance.

Non-fried snacks are produced by extrusion technology; for example snacks based on corn are obtained by extruding pellets starting from corn starch-based doughs, partial drying of the pellets and their expansion in warm air, obtaining a very aerated and light structure.

Instead today's currently known pasta based snacks are obtained through a two phase process, that provides for the extrusion of a dough of durum wheat semolina and water and its frying (see, e.g. patent application EP-A-0 588 600). The fat content of snacks produced in this way is therefore quite high (around 15%).

US patent 5,695,804 discloses a durum wheat-based chip-like snack, the dough comprising at least one durum wheat ingredient (in an amount variable between 45 and 75% by weight), a no- or low-gluten content starchy material, water and a reducing agent. The resulting dough is suitable for laminating and for the production of reduced-, low- or zero-fat chip-like products. The reducing agent is essential in this recipe to promote machinability of the dough or dough-like mixture and to obtain the desired final product texture.

US patent 4,525,371 describes a process for the manufacture of high lecithin content egg noodles including the steps of mixing the eggs with the lecithin, blending the slurry with flour, extruding the dough to form the noodles, cutting the noodles and drying the noodles. The noodles thus formed may then be puff-dried, for example in a microwave to form expanded dry snacks.

US document 5,861,186 describes a process for manufacturing a dry instant-noodles product comprising the steps of cooking the noodles, transporting them on a net conveyor and applying air, inert gas or a mixture thereof to the strings at a temperature of 100°-200°C.

Document XP-002190461 is concerned with a typical cereal line process consisting of one or two dryers and a cooler. The extrudate is conveyed to a high temperature (200-260°C) dryer, where it also puffs; the temperature is lowered (150-200°C) in the following zone (toasting), where it further dries. The cooler then lowers the temperature to stop the cooking process.

Finally, there has been the recent disclosure, in the patent US 6 045 851, of a new process for preparing snacks with a pasta base that avoids the above mentioned frying phase and permits the obtaining of a snack with a low fat content (lower than 2%).

According to such a process the pasta based snacks are prepared by subjecting a dough for pasta to extrusion to obtain pellets that are then partially dried in hot air, kept in constant movement by air at a lower temperature than the drying air, and finally expanded with hot air.

The thus obtained snacks are very aerated, greatly "blown up", and do not show a well defined and constant form like that of classic pasta shapes.

The problem at the base of the present invention is that of making available a pasta based snack in align with the current demand for foods of low fat content but with organoleptic-structural characteristics close to those of the fried snacks, and with an appearance that brings to mind as much as possible the look of traditional pasta shapes.

### Summary of the invention

Such a problem has been solved, according to the invention, by a method for the production of a pasta-based snack that includes the steps of:
a) preparing a dough mix with a 26-35%wt moisture content starting from a mixture containing a starch based flour containing at least 50%wt durum wheat semolina, water and salt;
b) shaping the pasta by extruding the dough through a die, wherein the dough has a temperature lower than 80°C in the area immediately preceding the die;
c) subjecting the thus shaped pasta to baking in a hot air oven at a temperature of a 220°-280°C with an air flow rate of at least 15 m/s, thus causing its surface expansion;
d) taking the moisture content of the expanded baked pasta to a value lower than or equal to 6%wt, optionally through an additional drying phase.

The moisture content of the expanded baked pasta is suitably taken to a value lower than or equal to 2%.

The shaping of the pasta by extruding the dough indicated in step b) includes, implicitly, the cutting operation of the extrudate, carried out each time a "short" pasta shape is produced.

The final expanded baked pasta can possibly have one or more ingredients added to it, such ingredients being selected from the group comprising vegetable oils, flavors, powdered cheese, powdered dried vegetables and salt.

The moisture content of the starting dough is suitably between 28 and 30%.

The air flow rate during the oven baking phase is preferably between 15 and 30 m/s.

The term "starch based flour" is intended as a material in powder or granules obtained by the grinding of parts of vegetables containing, as the quantitatively prevailing ingredient, starch.

In particular, the starting starch-based flour contains at least one further component preferably selected from the group comprising: soft wheat flour, rice flour, corn flour, native starch of wheat, native starch of corn, potato starch, potato flour, potato flakes, "waxy" corn starch, pre-gelatinized starch and their mixtures.

Furthermore the starting dough can include other optional ingredients like proteins, particularly vegetable and milk proteins, for up to 10% of the total weight of the dough.

Other optional ingredients in the starting dough are the following:
dehydrated powdered vegetables, particularly tomatoes and spinach, up to 5% of the total weight of the dough;
powdered cheese, lactose, in particular for up to 5% of the total weight of the dough;
emulsifiers like, in particular, lecithin and mono- and diglycerides of alimentary fatty acids (for up to 1% of the total weight of the dough);
fats, and in particular vegetable oils and vegetable margarine, for up to 3% of the total weight of the dough.

The starch based flour can be mixed with water and with the possible additional ingredients in a mixer chosen from among those usually used for the production of pasta, or in the extruder itself where the extrusion will later take place. Once the said ingredients are fed into the first area of the extruder, that can be a single- or a twin-screw extruder, the kneading is done at low speeds for about 20'. The dough in the area of the extruder immediately preceding the die is at a temperature generally higher than 60°C.

With regard to the dies, convenient use can be made of dies traditionally employed in pasta production, provided they have a wad thickness of 0.3 to 0.7 mm, with an optimal value of 0.4 mm.

With such dies practically all the classic short pasta shapes can be obtained, such as e.g., penne, half-penne, rigatoni, helixes, fusilli, macaroni.

The product leaving the extruder is cut appropriately into pasta pieces of the desired shape, and these are transported, by a means that avoids product sticking, e. g. vibrating nylon frames, to an expansion oven of the hot air-jet type ("impingement").

In order to increase to the maximum the crispness of the final snack and to extend its shelf life as much as possible, the moisture content of the expanded pasta can be taken to a value lower than, or equal to, 2%, by submitting the expanded pasta to a further drying phase in a hot-air stream, e. g. in a Proctor dryer type oven at 100°C.

At this point the pasta snack can be packed as is or put through a flavoring phase, done according to known methods like, for example, passage through flavoring drums. In this case, the snack is sprayed with vegetable oil in a first drum and, in a second drum, with flavors and powdered ingredients like cheeses, dehydrated vegetables, spices, salt, sugars etc..

The pasta snack obtained by the method according to the present invention is characterized by being extremely crisp and crumbly, bringing very much to mind the classic potato crisp, but having a markedly lower fat content, generally lower than 2% in the non-flavored version.

The snack according to this last version is itself already endowed with particularly appreciated organoleptic and textural characteristics and is, furthermore, suitable to be consumed accompanied by sauces (e.g., ketchup, tartar sauce, spicy sauces, mayonnaise, etc.).

The apparent specific weight of the snack according to the invention obviously varies according to the particular pasta shape that it simulates but results in being constantly superior to that typical of low-fat content pasta snacks known till now. This indicates that the snacks, according to the present invention, have undergone controlled expansion that leads to a structure that is not extremely aerated and "blown up " like in the above cited snacks of low-fat content.

### Detailed description

The method according to the present invention will be further described by making reference to some examples, given in explanation but not limitative.

### EXAMPLE 1

A dough for the production of a snack according to the invention has been prepared starting from the following ingredients, where the quantities are expressed in kg:

| | |
|---|---|
| Durum wheat semolina | 5.5 |
| Water | 2.9 |
| Potato flour | 4.5 |
| Pre-gelatinized starch | 0.83 |
| Salt | 0.25 |

The above listed ingredients were kneaded for about 30' in a horizontal paddle mixer. The resultant dough, with a moisture content of about 29%, was then submitted to extrusion in a press for pasta at a pressure of 90 bar, using a die for spiral noodles (tortiglioni) with a wad thickness of 0.4 mm; the extruded pasta leaving the die were cut into 4 cm long pieces (tortiglioni).

The tortiglioni obtained as a result of cutting the extruded pasta were collected on frames and loaded into a Wolverine Jetzone oven where they were kept for 35 seconds at 260°C and an air flow rate of 20 m/s, obtaining in this way the expansion of the tortiglioni. Finally the expanded tortiglioni were dried for 60' in a static oven with hot air (100°C) to take them to a moisture content of 2%.

### Reference EXAMPLE 2

A dough for the production of a snack according to the invention was prepared starting from the following ingredients, where the quantities are expressed in kg:

| | |
|---|---|
| Potato flour | 5.7 |
| Potato starch | 4.9 |
| Water | 4.5 |
| Potato granules | 2.0 |
| Vegetable margarine | 0.77 |
| Salt | 0.25 |
| Lactose | 0.15 |
| Lecithin in powder | 0.04 |
| Monoglycerides of fatty alimentary acids | 0.04 |

The ingredients listed above were kneaded for about 20' in a horizontal paddle mixer. The thus obtained pasta, that had a moisture content of about 31%, was then subjected to extrusion in a press for making pasta at a pressure of 60 bar, using a die for penne rigate ('scored' penne) with a wad thickness of 0.4 mm and cutting the extruded pasta leaving the die in 4 cm long pieces (penne rigate).

The penne rigate obtained as a result of cutting the extruded pasta were collected on frames and loaded in an "impingement" Fen type oven and kept there for 48 seconds at 240°C with an air flow rate of 18 m/s, obtaining in this way the expansion of the penne. The expanded penne were finally dried for 60' in a static oven with hot air (100°C) to take them to a moisture content of 2%.

The apparent specific weight of the expanded penne rigate prepared in this way was 120 g/l.

### EXAMPLE 3

A dough for the production of a snack according to the invention was prepared starting from the following ingredients, where the quantities are expressed in kg:

| | |
|---|---|
| Durum wheat semolina | 10 |
| Corn starch | 5 |
| Salt | 0.15 |

The above mentioned ingredients were fed into a twin-screw extruder BC 45 Clextral equipped with a die for fusilli, continuously adding water with such a flow rate as to obtain a pasta with a moisture content of 27%. The extruder was kept at the following temperatures: t₁ 35°C, t₂ 60°C, t₃ 36°C. The extrusion of the pasta occurred at a pressure of 85 bar and, as it extruded, the product had a temperature of 55°C.

The fusilli obtained on cutting the extruded pasta (length 4 cm and diameter 0.5 cm) were collected on frames and loaded in an "impingement" Fen type oven and kept there for 45 seconds at 240°C with an air flow rate of 21 m/s, obtaining in this way the expansion of the fusilli. The expanded fusilli were finally dried for 8' in a hot air Proctor dryer (100°C) to take them to a moisture content of 2%.

The apparent specific weight of the expanded fusilli prepared in this way was 140 g/l.

### EXAMPLE 4

A dough for the production of a snack according to the invention was prepared starting from the following ingredients, whose quantities are expressed in kg:

| | |
|---|---|
| Durum wheat semolina | 10 |
| Corn starch | 5 |
| Water | 4 |
| Salt | 0.15 |

The ingredients listed above were kneaded for about 20' in a horizontal paddle mixer. The thus obtained pasta, that had a moisture content of about 30%, was then subjected to extrusion in a single-screw extruder for pasta at a pressure of 80 bar, using a die for pipe rigate with a wad thickness of 0.4 mm.

The pipe rigate obtained as a result of cutting off the extruded pasta were collected on frames and loaded into an "impingement" Fen type oven where they were kept for 40 seconds at 250°C with an air flow rate of 20 m/s, obtaining in this way the expansion of the pipe rigate. The expanded pipe rigate were finally dried for 60' in a static hot air oven (100°C) to take them to a moisture content of 2%.

At the end of the drying, the expanded pipe rigate were flavored by passing them through appropriate flavoring drums, using for 100 parts by weight of expanded pipe rigate 2 parts by weight of basil flavoring and 15 parts by weight of the following mixture:

| | |
|---|---|
| Vegetable oil | 71 % |
| Basil in powder | 11.5% |
| Salt | 8% |
| Ground pine nuts | 3.7% |
| Flavoring | 2.5% |
| Powdered Parmesan cheese | 2.34% |
| Powdered pecorino (sheep) cheese | 0.6% |
| Sugar | 0.6% |
| Powdered garlic | 0.01% |

The percentages reported above are by weight of the total weight of the mixture.

## Claims

1. A method for the production of a pasta-based snack including the steps of:
a) preparing a dough mix with a moisture content of 26-35%wt starting from a mixture including a starch based flour containing at least 50%wt durum wheat semolina, water and salt;
b) shaping the pasta by extruding said dough through a die, wherein the dough has a temperature lower than 80°C in the area immediately preceding the die;
c) subjecting the thus shaped pasta to oven-baking in hot air at a temperature of 220°-280°C with an air flow rate of at least 15 m/s, achieving its expansion;
d) taking the moisture content of the expanded baked pasta to a value lower than or equal to 6%wt, optionally through an additional drying phase.

2. A method according to claim 1, wherein said moisture content of the pasta is taken to a value lower than or equal to 2%wt.

3. A method according to claim 1 or 2, including the further step of adding to said expanded dried baked pasta one or more ingredients chosen from the group including vegetable oils, flavors, powdered cheeses, powdered dehydrated vegetables and salt;

4. A method according to any one of claims 1 to 3, wherein the moisture content of said dough is between 28 and 30%wt.

5. A method according to any one of the previous claims, wherein the air flow rate during the step c) of oven baking is between 15 and 30 m/s.

6. A method according to any one of the previous claims, wherein said starch based flour contains at least one further component selected among the group including: soft wheat flour, rice flour, corn meal, wheat native starch, corn native starch, "waxy" corn starch, potato starch, potato flour, potato flakes, pre-gelatinized starch and mixtures thereof.

7. A method according to any one of claims 1 to 5, wherein said starch based flour is made of durum wheat semolina.

8. A method according to any one of the previous claims, wherein said dough mix contains at least one ingredient selected from the group including vegetable proteins, milk proteins, powdered dehydrated vegetables, powdered cheeses, lactose, lecithin and alimentary mono- and diglyceride fatty acids, vegetable oils and vegetable margarine.

9. A method according to any one of the previous claims, wherein said step b) of extrusion is carried out by means of a press for making pasta fitted with a die having a wad thickness between 0.3 and 0.7 mm.

10. A method according to any one of the previous claims, including the further step of subjecting said dried expanded baked pasta coming from step d) to flavoring.

11. A method according to claim 10, wherein said flavoring is done by adding, to said dried expanded baked pasta, dosed quantities of vegetable oil and at least one powdered ingredient selected from the group including flavorings, cheeses, dehydrated vegetables, spices, salt, sugars.

12. A snack based on pasta with a fat content of lower than 2% in weight and having the typical form of a short pasta format, obtainable by the method according to any one of the previous claims.

## Patentansprüche

1. Verfahren für die Herstellung eines Teigwaren-Snacks, dass die Schritte einschließt:
a) Herstellen einer Teigmischung mit einem Feuchtigkeitsgehalt von 26-35 Gew.-% ausgehend von einer Mischung, die ein auf Stärke basierendes Mehl beinhaltet, das zumindest 50 Gew.-% Hartweizengrieß, Wasser und Salz enthält;
b) Formen der Teigware durch Extrusion des Teigs durch eine Düse, wobei der Teig eine Temperatur von weniger als 80°C im der Düse unmittelbar vorangehenden Bereich hat;
c) Unterziehen der so geformten Teigware eines Backvorgangs in heißer Luft bei einer Temperatur von 220°-280°C und einer Luftstromrate von zumindest 15 m/s, um deren Expansion zu erreichen;
d) Erhalten eines Feuchtigkeitsgehalts der expandierten, gebackenen Teigware mit einem Wert von weniger oder gleich 6 Gew.-%, gegebenenfalls durch eine zusätzliche Trocknungsphase.

2. Verfahren nach Anspruch 1, wobei ein Feuchtigkeitsgehalt der Teigware von weniger oder gleich 2 Gew.-% erhalten wird.

3. Verfahren nach Anspruch 1 oder 2, einschließlich den weiteren Schritt der Zugabe einer oder mehrerer Zutaten zur expandierten, getrockneten und gebackenen Teigware ausgewählt aus der Gruppe enthaltend pflanzliche Öle, Aromen, pulvrige Käse, pulvrige dehydrierte Gemüse und Salz.

4. Verfahren nach einem der Ansprüche 1 bis 3, wobei der Feuchtigkeitsgehalt des Teigs zwischen 28 und 30 Gew.-% ist.

5. Verfahren nach einem der vorangehenden Ansprüche, wobei die Luftstromrate während des Schritts c) des Backvorgangs zwischen 15 und 30 m/s ist.

6. Verfahren nach einem der vorangehenden Ansprüche, wobei das auf Stärke basierende Mehl zumindest eine weitere Komponente ausgewählt innerhalb der Gruppe beinhaltend: Weichweizenmehl, Reismehl, Maismehl, native Weizenstärke, native Maisstärke, Wachsmaisstärke, Kartoffelstärke, Kartoffelmehl, Kartoffelflocken, Quellstärke und Mischungen davon, enthält.

7. Verfahren nach einem der Ansprüche 1 bis 5, wobei das auf Stärke basierende Mehl aus Hartweizengrieß ist.

8. Verfahren nach einem der vorangehenden Ansprüche, wobei die Teigmischung zumindest eine Zutat ausgewählt aus der Gruppe beinhaltend pflanzliche Proteine, Milchproteine, pulvrige dehydrierte Gemüse, pulvrige Käse, Lactose, Lecithin und essbare Mono- und Diglycerid-Fettsäuren, pflanzliche Öle und pflanzliche Margarine.

9. Verfahren nach einem der vorangehenden Ansprüche, wobei der Extrusionsschritt b) durchgeführt wird mittels einer Presse zur Herstellung von Teigwaren, die mit einer Düse ausgestattet ist, die eine Lochdicke zwischen 0.3 und 0.7 mm hat.

10. Verfahren nach einem der vorangehenden Ansprüche, einschließend den weiteren Schritt des Unterziehens der getrockneten, expandierten, gebackenen Teigware von Schritt d) einer Aromatisierung.

11. Verfahren nach Anspruch 10, wobei die Aromatisierung erfolgt durch Zugabe dosierter Mengen von pflanzlichen Öl und zumindest einer pulvrigen Zutat ausgewählt aus der Gruppe beinhaltend Aromen, Käse, dehydrierte Gemüse, Gewürze, Salz und Zucker.

12. Ein Snack basierend auf Teigware mit einem Fettgehalt von weniger als 2 Gew.-%, der die typische Gestalt von kurzen Nudeln hat, erhaltbar durch ein Verfahren nach einem der vorangehenden Ansprüche.

## Revendications

1. Procédé de production d'un encas à base de pâtes comprenant les étapes consistant à :
a) préparer un appareil sous forme de pâte ayant une teneur en humidité de 26 à 35 % en poids à partir d'un mélange comprenant une farine à base d'amidon contenant au moins 50 % en poids de semoule de blé dur, de l'eau et du sel ;
b) former les pâtes par extrusion de ladite pâte à travers une filière, dans laquelle la pâte a une température inférieure à 80 °C dans la zone précédant immédiatement la filière ;
c) soumettre les pâtes ainsi formées à une cuisson au four dans de l'air chaud à une température de 220° à 280 °C avec un débit d'air d'au moins 15 m/s, réalisant leur expansion ;
d) amener la teneur en humidité des pâtes cuites expansées à une valeur inférieure ou égale à 6 %, en poids, éventuellement par une phase de séchage supplémentaire.

2. Procédé selon la revendication 1, dans lequel ladite teneur en humidité des pâtes est amenée à une valeur inférieure ou égale à 2 % en poids.

3. Procédé selon la revendication 1 ou 2, comprenant l'étape supplémentaire consistant à ajouter auxdites pâtes cuites séchées expansées un ou plusieurs ingrédients choisis dans le groupe constitué par les huiles végétales, les saveurs, les fromages en poudre, les légumes déshydratés en poudre et le sel.

4. Procédé selon l'une quelconque des revendications 1 à 3, dans lequel la teneur en humidité de ladite pâte est comprise entre 28 et 30 % en poids.

5. Procédé selon l'une quelconque des revendications précédentes, dans lequel le débit d'air pendant l'étape c) de cuisson au four est compris entre 15 et 30 m/s.

6. Procédé selon l'une quelconque des revendications précédentes, dans lequel ladite farine à base d'amidon contient au moins un composant supplémentaire choisi dans le groupe constitué par : la farine de blé tendre, la farine de riz, la farine de maïs, l'amidon natif de blé, l'amidon natif de maïs, l'amidon de maïs "cireux", l'amidon de pommes de terre, la farine de pommes de terre, les flocons de pommes de terre, l'amidon prégélatinisé et des mélanges de ces derniers.

7. Procédé selon l'une quelconque des revendications 1 à 5, dans lequel ladite farine à base d'amidon est faite de semoule de blé dur.

8. Procédé selon l'une quelconque des revendications précédentes, dans lequel ladite pâte contient au moins un ingrédient sélectionné dans le groupe constitué par les protéines végétales, les protéines du lait, les légumes déshydratés en poudre, les fromages en poudre, le lactose, la lécithine et les acides gras de mono- et diglycérides alimentaires, les huiles végétales et la margarine végétale.

9. Procédé selon l'une quelconque des revendications précédentes, dans lequel ladite étape b) d'extrusion est effectuée au moyen d'une presse pour faire des pâtes à travers une filière ayant une épaisseur d'accumulation comprise entre 0,3 et 0,7 mm.

10. Procédé selon l'une quelconque des revendications précédentes, incluant l'étape supplémentaire consistant à soumettre lesdites pâtes cuites expansées séchées provenant de l'étape d) à un assaisonnement.

11. Procédé selon la revendication 10, dans lequel ledit assaisonnement est effectué en ajoutant, auxdites pâtes cuites expansées séchées, des quantités dosées d'huile végétale et au moins un ingrédient en poudre sélectionné dans le groupe constitué par les assaisonnements, les fromages, les légumes déshydratés, les épices, le sel, les sucres.

12. Encas à base de pâtes ayant une teneur en matières grasses inférieure à 2 % en poids et ayant la forme classique d'un format de pâtes courtes, pouvant être obtenu par le procédé selon l'une quelconque des revendications précédentes.
